# EUROPÄISCHE PATENTSCHRIFT

(11) **EP 1 630 434 B1**
(45) Veröffentlichungstag und Bekanntmachung des Hinweises auf die Patenterteilung: **24.11.2010**
(21) Anmeldenummer: 05018326.8
(22) Anmeldetag: 24.08.2005
(51) Int. Cl.: F16C 29/02, B23Q 1/26

(54) **Lineares Gleitführungssystem**
Linear slide bearing system
Système de palier lisse longitudinal

(30) Priorität: 28.08.2004 DE 102004041745
(43) Veröffentlichungstag der Anmeldung: 01.03.2006
(73) Patentinhaber: Index-Werke GmbH & Co. KG Hahn & Tessky, 73730 Esslingen (DE)
(72) Erfinder: Grossmann, Walter, 73666 Baltmannsweiler (DE); Hofmann, Manfred, 70565 Stuttgart (DE)
(74) Vertreter: Hoeger, Stellrecht & Partner Patentanwälte

(56) Entgegenhaltungen:
- EP-A- 1 231 392
- DE-A1- 1 904 998
- DE-A1- 4 227 604
- DE-A1- 19 724 852
- GB-A- 948 140
- JP-A- 5 253 775

## Beschreibung

Die Erfindung betrifft ein Gleitführungssystem für Werkzeugmaschinen, umfassend eine Führungsschiene mit einem Fußbereich und einem sich von diesem zu einem Führungsbereich erstreckenden Tragbereich, mit einer am Führungsbereich auf einer dem Tragbereich gegenüberliegenden Seite angeordneten ersten Stützfläche sowie am Führungsbereich auf einer dem Tragbereich zugewandten Seite beiderseits des Tragbereichs angeordneten zweiten Stützflächen und mit außerdem am Führungsbereich seitlich zwischen der ersten Stützfläche und den zweiten Stützflächen angeordnete Seitenführungsflächen, und ferner umfassend mindestens eine Gleitführungsaufnahme, welche an den Stützflächen und den Führungsflächen der Führungsschiene gleitend geführt ist.

Derartige Gleitführungssysteme sind aus der DE 197 24 852 A1bekannt. Bei derartigen bekannten Gleitführungssystemen wird die Gleitführungsaufnahme üblicherweise durch eine nutähnliche Vertiefung an einem Maschinenelement zur Aufnahme des Führungsbereichs mit der ersten Stützfläche und den Seitenführungsflächen gebildet und außerdem wird die Vertiefung durch die zweiten Stützflächen hintergreifende Leisten am Maschinenelement ergänzt. Derartige Gleitführungssysteme haben den Nachteil, dass die Herstellung derselben bei ausreichend großer Präzision einen hohen Aufwand erfordert und dass außerdem eine ausreichend gute Führungsstabilität eine voluminöse Bauweise erforderlich macht.

Der Erfindung liegt daher die Aufgabe zugrunde, ein Gleitführungssystem der eingangs beschriebenen Art dahingehend zu verbessern, dass bei möglichst kompakter Bauweise eine möglichst große Führungsstabilität bei hoher Führungsgenauigkeit erreichbar ist.

Diese Aufgabe wird bei einem Gleitführungssystem der eingangs beschriebenen Art erfindungsgemäß dadurch gelöst, dass die Gleitführungsaufnahme als Gleitführungsschuh ausgebildet ist und einen Auflagekörper aufweist, welcher mit einer ersten Tragfläche auf der ersten Stützfläche aufliegt, dass der Gleitführungsschuh zwei Seitenteile aufweist, von denen jedes mit jeweils einer Gleitführungsfläche an einer der Seitenflächen anliegt und mit jeweils einer zweiten Tragfläche an jeweils einer der zweiten Stützflächen anliegt, dass mindestens eines der Seitenteile relativ zum Auflagekörper in einer zur jeweiligen Gleitführungsfläche parallel und quer zu den Tragflächen verlaufenden Einstellrichtung relativ zum Auflagekörper einstellbar gehalten ist, dass der Auflagekörper mindestens eine Ausrichtfläche aufweist, von welcher das einstellbare Seitenteil mit einer Anlagefläche in der Einstellrichtung einstellbar anliegt, die Ausrichtfläche die Position der Gleitführungsfläche des an diese Ausrichtfläche anlegbaren Seitenteils gegenüber der Gleitführungsfläche des anderen Seitenteils festlegt und dass das mindestens eine der Seitenteile in der eingestellten Stellung mit dem Auflagekörper verbindbar ist.

Der Vorteil der erfindungsgemäßen Lösung ist darin zu sehen, dass durch die Ausbildung der Gleitführungsaufnahme als Gleitführungsschuh ein separat von dem Maschinenelement herstellbares Bauteil zur Verfügung steht, welches einfach und kostengünstig aufgebaut und dadurch einfacher herstellbar ist und beispielsweise auch einen Einbau des Gleitführungssystems anstelle eines Wälzführungssystems mit Wälzführungsschuhen ermöglicht.

Außerdem ist aufgrund der mehrteiligen Ausbildung des Gleitführungsschuhs durch den Auflagekörper mit der ersten Tragfläche und die Seitenteile mit den Gleitführungsflächen und den zweiten Tragflächen die Herstellbarkeit gegenüber den bekannten Gleitführungsschuhen erheblich vereinfacht.

Erfindungsgemäß besteht somit die Möglichkeit, die Seitenteile bei Montage des Gleitführungsschuhs präzise einzustellen und somit auch den Abstand zwischen der ersten Tragfläche und der dem Seitenteil zugeordneten zweiten Tragfläche präzise einzustellen und andererseits bei später auftretendem Verschleiß nachzustellen.

Bei der einfachsten Ausführung der erfindungsgemäßen Lösung könnte eines der Seitenteile einstückig an den Auflagekörper angeformt sein.

Besonders zweckmäßig ist es jedoch, wenn beide Seitenteile relativ zum Auflagekörper positionierbar und in dieser Stellung mit dem Auflagekörper verbindbar sind.

Damit besteht die Möglichkeit, beim Zusammenbau des Auflagekörpers und der Seitenteile zu dem Gleitführungsschuh den Auflagekörper und die Seitenteile relativ zueinander so zu positionieren, dass die erste Tragfläche und die zweiten Tragflächen in einem für eine präzise Führung an der ersten Stützfläche und zweiten Stützflächen der Führungsschiene geeigneten Abstand voneinander stehen.

Die Positionierung des Auflagekörpers relativ zu den Seitenteilen könnte prinzipiell in jeder denkbaren Art und Weise erfolgen.

Beispielsweise könnte die Positionierung des Auflagekörpers zu den Seitenteilen nach einer einmaligen Ausrichtung derselben zueinander durch einen Fügeprozess festgehalten werden.

Noch vorteilhafter ist es dabei, wenn beide Seitenteile in einer zu ihrer jeweiligen Gleitführungsfläche parallel und quer zu den Tragflächen verlaufenden Einstellrichtung einstellbar relativ zum Auflagekörper gehalten sind, so dass mit jedem der Seitenteile der Abstand zwischen der ersten Tragfläche und der diesem Seitenteil zugeordneten zweiten Tragfläche separat einstellbar ist.

Diese Einstellbarkeit der Seitenteile relativ zu dem Auflagekörper lässt sich durch verschiedene Maßnahmen realisieren.

Beispielsweise können hierzu im Extremfall Führungen mit Führungsbahnen und Führungskörpern vorgesehen sein.

Besonders günstig ist es, wenn dabei die Ausrichtfläche eine Seitenfläche des Auflagekörpers bildet.

Ferner ist es besonders günstig, wenn auch das Seitenteil eine die Ausrichtfläche übergreifende Anlagefläche aufweist, um eine stabile und flächige Abstützung zwischen dem jeweiligen Seitenteil und dem Auflagekörper zu erreichen.

Prinzipiell könnte die Position der Gleitführungsfläche des jeweiligen Seitenteils unabhängig von der Führung des Seitenteils am Auflagekörper realisiert sein.

Damit dient die Ausrichtfläche nicht nur zur Realisierung der Einstellbarkeit des Seitenteils und der Ausrichtung des Seitenteils relativ zum Auflagekörper, sondern auch dazu, die exakte Position der Gleitführungsfläche relativ zum Auflagekörper und somit auch relativ zum anderen Seitenteil festzulegen.

Besonders günstig ist es dabei, wenn der Auflagekörper für jedes der Seitenteile eine Ausrichtfläche aufweist und wenn über diese Ausrichtfläche ein Abstand der Gleitführungsflächen der an diesen Ausrichtflächen anlegbaren Seitenteile definiert ist.

Somit kann der Auflagekörper mit den Ausrichtflächen dazu eingesetzt werden, beispielsweise durch Präzisionsbearbeiten der Ausrichtflächen, die Lage der Gleitführungsflächen der an diesem Auflagekörper anlegbaren Seitenteile präzise festzulegen.

Prinzipiell könnte die jeweilige Ausrichtfläche unabhängig von der jeweiligen Gleitführungsfläche ausgebildet sein.

Vorteilhafterweise verläuft die Ausrichtfläche parallel zur Gleitführungsfläche.

Eine hinsichtlich der Herstellbarkeit besonders einfache und somit kostengünstige Lösung sieht jedoch vor, daß die jeweilige Ausrichtfläche mit der jeweiligen Gleitführungsfläche fluchtend verläuft, das heißt eine als solche herstellbare Fläche bildet.

Hinsichtlich der Fixierung der Seitenteile an dem Auflagekörper wurden bislang keine weiteren Angaben gemacht.

So besteht die Möglichkeit, die Seitenteile und den Auflagekörper beispielsweise formschlüssig relativ zueinander zu fixieren, beispielsweise durch nach einer Einstellung derselben relativ zueinander eingebrachte Bohrungen und in diese Bohrungen eingebrachte Stifte.

Um jedoch die Einstellbarkeit jederzeit zu gewährleisten, und insbesondere eine spätere stufenlose Einstellbarkeit zu erreichen, ist es von Vorteil, wenn der Auflagekörper und die Seitenteile gegen eine Bewegung in der Einstellrichtung kraftschlüssig aneinander fixierbar sind.

Eine derartige kraftschlüssige Verbindung zwischen dem Auflagekörper und den Seitenteilen läßt sich einfach, nämlich durch Verspannen von Auflagekörper und Seitenteilen, herstellen und andererseits wieder zum Einstellen derselben relativ zueinander leicht lösen.

Um besonders gute Gleiteigenschaften zu erhalten, ist vorzugsweise vorgesehen, daß die erste Tragfläche des Auflagekörpers mit einer verschleißreduzierenden Beschichtung versehen ist.

Ferner ist es vorteilhaft, wenn die zweiten Tragflächen der Seitenteile mit einer verschleißreduzierenden Beschichtung versehen sind.

Darüber hinaus ist es außerdem vorteilhaft, wenn die Gleitführungsflächen der Seitenteile mit einer verschleißreduzierenden Beschichtung versehen sind.

Hinsichtlich der Fixierung des Gleitführungsschuhs an einem den Gleitführungsschuh tragenden Maschinenelement wurden bislang keine näheren Angaben gemacht.

So wäre es beispielsweise denkbar, sowohl die Seitenteile als auch den Auflagekörper an dem den Gleitführungsschuh tragenden Maschinenelement oder Maschinengestell feststehend zu fixieren.

Eine besonders günstige Lösung sieht jedoch vor, daß die beiden Seitenteile mit einem jeweiligen Fußteil an dem den Gleitführungsschuh tragenden Maschinenelement oder Maschinengestell feststehend angeordnet sind und daß der Auflagekörper gegenüber dem Maschinenelement und den Seitenteilen einstellbar angeordnet ist.

Damit läßt sich sowohl beim Zusammenbau des Gleitführungsschuhs als auch nachträglich jederzeit der Auflagekörper relativ zu den Seitenteilen und somit die erste Tragfläche relativ zu den zweiten Tragflächen auch bei eingebautem Gleitführungsschuh einstellen.

Eine alternative Lösung sieht vor, daß der Auflagekörper gegenüber dem Maschinenelement oder Maschinengestell feststehend angeordnet ist und daß die Seitenteile gegenüber dem Maschinenelement und dem Auflagekörper einstellbar angeordnet sind.

Auch hiermit besteht die Möglichkeit, einerseits den Abstand zwischen der ersten Tragfläche und den zweiten Tragflächen beim Zusammenbau und auch später jederzeit bei eingebautem Gleitführungsschuh einzustellen.

Der Gleitführungsschuh kann dabei an dem Maschinenelement oder Maschinengestell in beliebiger Art und Weise angeordnet sein.

Eine vorteilhafte Lösung sieht vor, daß der Gleitführungsschuh in einer Halteaufnahme des Maschinenelements oder Maschinengestells angeordnet ist.

Dabei ist es besonders günstig, wenn die Seitenteile mit einem Boden der Halteaufnahme verschraubt sind.

Um ferner den Auflagekörper leicht einstellen zu können ist vorzugsweise vorgesehen, daß der Boden der Halteaufnahme ein Stellelement zum Beaufschlagen des Auflagekörpers aufweist.

Alternativ dazu ist vorgesehen, daß der Auflagekörper mit dem Boden der Halteaufnahme verschraubt ist und insbesondere daß der Boden der Halteaufnahme Stellelemente zum Beaufschlagen der einstellbaren Seitenteile aufweist.

Um ferner den Gleitführungsschuh exakt relativ zu der Halteaufnahme in Richtung der Längsrichtung ausrichten zu können, ist vorzugsweise vorgesehen, daß die Halteaufnahme zwei einander gegenüberliegende und die Seitenteile zwischen sich aufnehmende Positionierelemente aufweist.

Zweckmäßigerweise ist dabei vorgesehen, daß ein erstes der Positionierelemente als Anschlag ausgebildet ist und ein zweites der Positionierelemente ein Stellelement aufweist, mit welchem der Gleitführungsschuh gegen das erste Positionierelement anlegbar ist.

Um außerdem mit dem erfindungsgemäßen Gleitführungssystem hohe Verfahrgeschwindigkeiten, insbesondere im Eilgang, erreichen zu können, ist vorzugsweise vorgesehen, daß in dem Gleitführungsschuh ein Schmiermittelkanalsystem zur Schmierung der ersten Tragfläche angeordnet ist.

Ferner ist es günstig, wenn in dem Gleitführungsschuh ein Schmiermittelkanalsystem zur Schmierung der zweiten Tragflächen angeordnet ist.

Üblicherweise erfolgt bei einer Schmierung der ersten Tragfläche und der zweiten Tragfläche zwangsläufig auch eine Schmierung der Gleitführungsflächen des Gleitführungsschuhs.

Es ist aber auch denkbar, das Schmiermittelkanalsystem derart auszubilden, daß eine unmittelbare Schmierung der Gleitführungsflächen erfolgt.

Darüber hinaus betrifft die erfindungsgemäße Lösung eine Werkzeugmaschine umfassend ein Maschinengestell und ein am Maschinengestell angeordnetes und gegenüber diesem mittels mindestens einer Linearführung bewegbar geführtes Maschinenelement, wobei erfindungsgemäß die Linearführung als Hauptführung mindestens ein Gleitführungssystem aufweist, welches entsprechend einem der voranstehenden Ausführungsbeispielen ausgebildet ist, und mindestens ein weiteres Führungssystem als Nebenführung aufweist.

Das weitere Führungssystem kann dabei beispielsweise als Gleitführungssystem ausgebildet sein, bei welchem allerdings ein derart großes Spiel zwischen den Seitenführungsflächen und den Gleitführungsflächen erforderlich ist, so daß das weitere Führungssystem eine nicht vollständig parallele Ausrichtung der Führungsschienen der Hauptführung und der Nebenführung ausgleicht, so daß ein derartiges Gleitführungssystem nicht mehr zur Stabilität in Richtung quer zur Längsrichtung und parallel zu den Stütz- und Tragflächen beitragen kann.

Alternativ dazu sieht eine besonders günstige Lösung vor, daß das weitere Führungssystem ein Wälzführungssystem ist, welches im Wälzführungsschuh kein besonders Spiel benötigt, sondern aufgrund seiner Nachgiebigkeit ausreichend nachgiebig ist, um Fehler durch nicht vollständig parallele Ausrichtung der Führungsschienen ausgleichen zu können. Ein derartiges Wälzführungssystem als weiteres Führungssystem hat den Vorteil, daß dieses zwar in geringerem Maße als das als Hauptführung eingesetzte Gleitführungssystem zur Führungsstabilität in Längsrichtung der Führungsschiene des Gleitführungssystems beiträgt, jedoch immer noch einen Beitrag leistet im Gegensatz zum Vorsehen eines Gleitführungssystems als weiteres Führungssystem, das hinsichtlich des Spiels zwischen den Seitenführungsflächen und den Gleitführungsflächen so auszubilden ist, daß im wesentlichen keine Führungsstabilität quer zur Längsrichtung der Führungsschienen und parallel zu den Stütz- und Tragflächen erreicht wird.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: ein Querschnitt durch ein erstes Ausführungsbeispiel eines erfindungsgemäßen Gleitführungssystems als Hauptführung, montiert an einem Maschinengestell zur Führung eines Maschinenelements;
- Fig. 2: eine perspektivische Darstellung des ersten Ausführungsbeispiels des erfindungsgemäßen Gleitführungssystems;
- Fig. 3: einen Schnitt längs Linie 3-3 in Fig. 2;
- Fig. 4: eine Seitenansicht in Richtung des Pfeils A in Fig. 2;

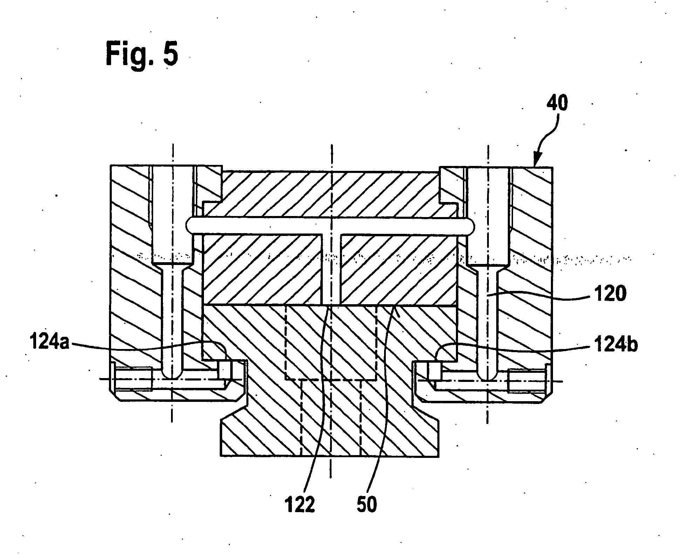

- Fig. 5: einen Schnitt längs Linie 5-5 in Fig. 4;
- Fig. 6: einen Schnitt ähnlich Fig. 1 durch einen Teilbereich einer Werkzeugmaschine mit einem erfindungsgemäßen Linearführungssystem;
- Fig. 7: einen Schnitt ähnlich Fig. 1 durch ein zweites Ausführungsbeispiel eines erfindungsgemäßen Gleitführungssystems und
- Fig. 8: einen Schnitt ähnlich Fig. 1 durch ein drittes Ausführungsbeispiel eines erfindungsgemäßen Gleitführungssystems.

Ein erstes Ausführungsbeispiel eines erfindungsgemäßen Gleitführungssystems 10 für Werkzeugmaschinen dient dazu, ein als Ganzes mit 12 bezeichnetes Maschinenelement der Werkzeugmaschine, welches beispielsweise ein Schlitten für Werkzeuge oder einen Werkzeugrevolver oder eine Spindel ist, relativ zu einem als Ganzes mit 14 bezeichneten Maschinengestell bewegbar zu führen.

Hierzu umfaßt das Gleitführungssystem 10 eine als Ganzes mit 20 bezeichnete Führungsschiene, welche mit einem Fußbereich 22 beispielsweise an dem Maschinengestell 14 gehalten ist und einen Tragbereich 24 aufweist, an welchem ein Führungsbereich 26 gehalten ist, wobei der Tragbereich 24 und der Führungsbereich 26 im wesentlichen T-förmig ausgebildet und zueinander angeordnet sind, so daß sich der Führungsbereich 26 im Querschnitt beiderseits über den Tragbereich 24 hinauserstreckt.

An dem Führungsbereich 26 ist auf einer dem Tragbereich 24 gegenüberliegenden Seite eine erste Stützfläche 30 vorgesehen und dieser gegenüberliegend auf einer dem Tragbereich 24 zugewandten Seite sind beiderseits des Tragbereichs zweite Stützflächen 32a und 32b vorgesehen, die zumindest in Richtung einer Längsrichtung 34 der Führungsschiene 20 parallel zur ersten Stützfläche 30 verlaufen, vorzugsweise aber auch quer zur Längsrichtung 34 parallel zur ersten Stützfläche 30 ausgerichtet sind.

Ferner ist der Führungsbereich 26 noch mit sich quer zur ersten Stützfläche 30 und den zweiten Stützflächen 32a und 32b sowie zwischen diesen erstreckenden Seitenführungsflächen 36a und 36b versehen.

Vorzugsweise verlaufen die Seitenführungsflächen 36a und 36b senkrecht sowohl zumindest zur ersten Stützfläche 30, vorzugsweise auch zu den zweiten Stützflächen 32a und 32b.

Auch die Seitenführungsflächen 36 erstrecken sich parallel zur Längsrichtung 34 der Führungsschiene 20.

An der derart ausgebildeten Führungsschiene 20 ist ein als Ganzes mit 40 bezeichneter Gleitführungsschuh in der Längsrichtung 34 derselben verschieblich geführt, wobei der Gleitführungsschuh einen Auflagekörper 42 aufweist, welcher zwischen zwei Seitenteilen 44a und 44b desselben angeordnet ist.

Der Auflagekörper 42 weist seinerseits eine der ersten Stützfläche 30 zugewandte erste Tragfläche 50 auf, die an der ersten Stützfläche 30 gleitend geführt ist.

Ferner weisen die Seitenteile 44a und 44b die zweiten Stützflächen 32a und 32b hintergreifende zweite Tragflächen 52a und 52b auf, die an den zweiten Stützflächen 32a und 32b ebenfalls gleitend geführt sind.

Schließlich erfolgt eine Führung des Gleitführungsschuhs 40 in Richtung der Längsrichtung 34 sowie parallel zu den Tragflächen 50, 52a, b durch an den Seitenführungsflächen 36a und 36b anliegende Gleitführungsflächen 56a und 56b, die an den Seitenteilen 44a und 44b angeordnet sind.

Die Seitenteile 44a und 44b sind durch den Auflagekörper 42 in definiertem Abstand miteinander positioniert, und zwar dadurch, daß der Auflagekörper 42 aufeinander gegenüberliegenden Seiten angeordnete Ausrichtflächen 60a und 60b aufweist, an welchen die Seitenteile mit Anlageflächen 62a und 62b anlegbar sind.

Die Ausrichtflächen 60a, b und die Anlageflächen 62a, b wirken derart zusammen, daß der Auflagekörper 42 durch die Paarung der Ausrichtfläche 60a mit Anlagefläche 62a und die Paarung der Ausrichtfläche 60b mit der Anlagefläche 62b in einer Einstellrichtung 64a bzw. 64b relativ zum jeweiligen Seitenteil 44a bzw. 44b quer zu den zweiten Tragflächen 52a und 52b bewegbar ist, um einen Abstand zwischen der ersten Tragfläche 50 und den zweiten Tragflächen 52a und 52b derart einzustellen, daß diese mit dem gewünschten Führungsspiel den Führungsbereich 26 der Führungsschiene 20 mit der ersten Stützfläche 30 und den zweiten Stützflächen 32a und 32b zwischen sich aufnehmen.

Dabei verlaufen die Einstellrichtungen 64 vorzugsweise parallel zueinander und auch parallel zu den Ausrichtflächen 60a und 60b bzw. den an diesen anliegenden Anlageflächen 62a und 62b.

Ferner sind vorzugsweise an den Seitenteilen 44a und 44b die Anlageflächen 62a und 62b so angeordnet, daß sie mit den Gleitführungsflächen 56a und 56b fluchten, und somit als eine zusammenhängende Fläche hergestellt werden können.

Die Ausrichtflächen 60a und 60b legen ihrerseits auch den Abstand zwischen den Seitenteilen 44a und 44b fest und somit auch den Abstand zwischen den Gleitführungsflächen 56a und 56b, die an den Seitenführungsflächen 36a und 36b des Führungsbereichs 26 mit dem für eine präzise Gleitführung in der Längsrichtung 34 erforderlichen Führungsspiel anliegen.

Es läßt sich somit durch Bearbeitung der Ausrichtflächen 60a und 60b, beispielsweise durch Schleifen, in einfacher Weise der Abstand der Gleitführungsflächen 56a und 56b und somit deren Führungsspiel für eine exakte Führung in der Längsrichtung 34 festlegen.

Die Seitenteile 44 sind dabei vorzugsweise durch seitlich an dem Auflagekörper 42 anlegbare und die Anlageflächen 62a, 62b tragende Wangenteile 46a und 46b gebildet, an welche einstückig die zweiten Stützflächen 32a und 32b hintergreifende und die zweiten Tragflächen 52a, b tragende Leisten 48a und 48b angeformt sind.

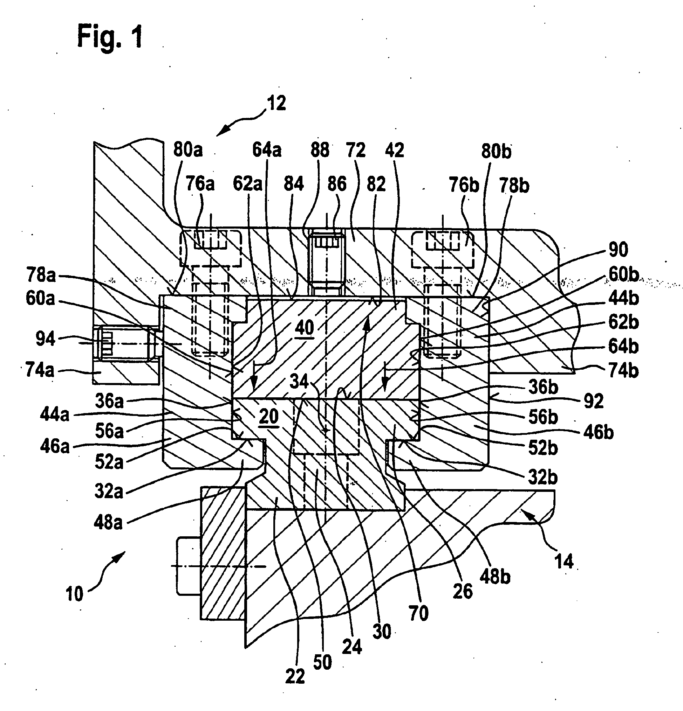

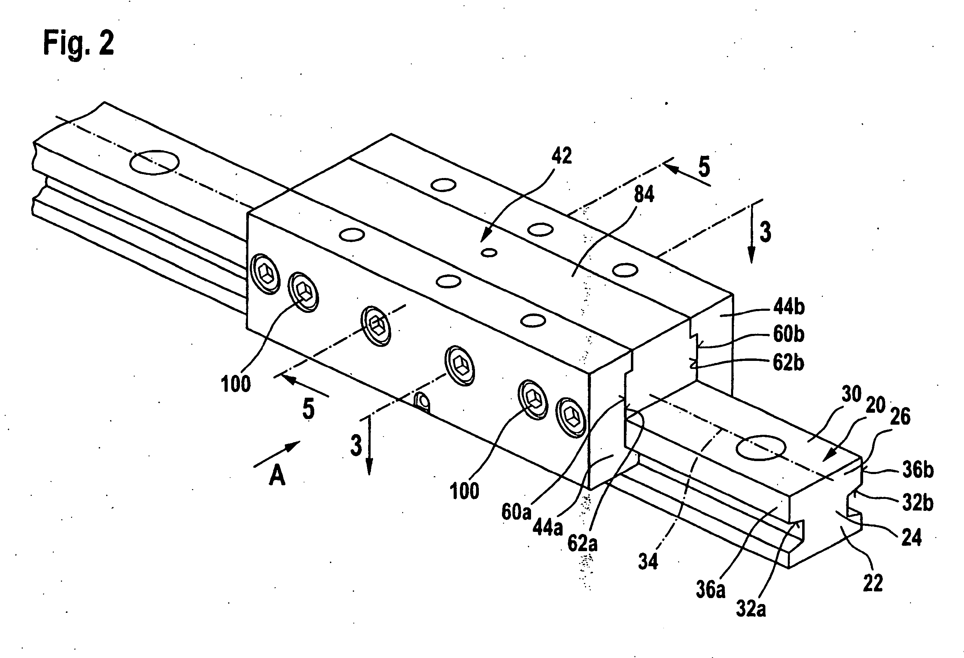

Durch die einteilige Ausbildung der Wangenteile 46a und 46b und der Leisten 48a und 48b ergibt sich eine sehr stabile Führung des Gleitführungsschuhs 40 an der Führungsschiene 20, insbesondere auch dann, wenn der Gleitführungsschuh 40 hängend an der Führungsschiene 20 geführt ist und nicht, wie in Fig. 1 und 2 beim ersten Ausführungsbeispiel dargestellt, auf der Führungsschiene 20 aufliegt.

Zur Fixierung des Gleitführungsschuhs 40 an dem Maschinenelement 12 ist das Maschinenelement 12 vorzugsweise mit einer Halteaufnahme 70 versehen, welche einen Boden 72 sowie zwei sich über den Boden 72 erhebende Positionierelemente 74a und 74b aufweist.

Wie in Fig. 1 dargestellt, sind die Seitenteile 44a, 44b mittels Schrauben 76a, 76b mit dem Boden 72 verschraubt, wobei die Seitenteile 44a, 44b auf dem Boden 72 aufsitzende Fußteile 78a, 78b mit Fußflächen 80a, 80b aufweisen, die unmittelbar auf einer den Seitenteilen 44a, 44b zugewandten Oberfläche 82 des Bodens 72 abgestützt und mittels der Schrauben 76a, 76b gegen diese Oberfläche 82 verspannt sind.

Die Oberfläche 82 stellt dabei eine die Präzision der Positionierung des Gleitführungsschuhs 40 definierende Oberfläche dar.

Im Gegensatz zu den Seitenteilen 44a, 44b ist der Auflagekörper 42 mit einer der Oberfläche 82 zugewandten Unterseite 84 in der Regel im Abstand von der Oberfläche 82 angeordnet, da der Auflagekörper 42 in Richtung der Einstellrichtungen 64a, 64b relativ zu den Seitenteilen 44a, 44b bewegbar sein soll, um den Abstand zwischen der ersten Tragfläche 50 und den zweiten Tragflächen 52a, 52b einstellen zu können.

Vorzugsweise ist hierzu noch im Boden 72 eine Stellschraube 86 in einer Gewindebohrung 88 vorgesehen, welche es erlaubt, den Auflagekörper 42 auf seiner Unterseite 84 zu beaufschlagen und in Richtung der Einstellrichtungen 64a, 64b zu verschieben, so lange, bis ein für eine präzise Führung des Gleitführungsschuhs 40 an der ersten Stützfläche 30 und den zweiten Stützflächen 32a, 32b erwünschtes Spiel zwischen der ersten Tragfläche 50 und den zweiten Tragflächen 52a, 52b besteht.

Darüber hinaus ist das Positionierelement 74b noch mit einer Anschlagfläche 90 versehen, gegen welche das Seitenteil 44b des Gleitschuhs 40 mit einer Außenseite 92 anlegbar ist, um den Gleitschuh 40 und das Maschinenelement 12 relativ zueinander präzise auszurichten.

Ferner ist das Positionierelement 74a seinerseits ebenfalls mit einer Stellschraube 94, welche in einer Gewindebohrung 96 des Positionierelements 74a angeordnet ist, versehen, mit welcher der gesamte Gleitführungsschuh 40 an der Anschlagfläche 90 kraftbeaufschlagt anlegbar ist.

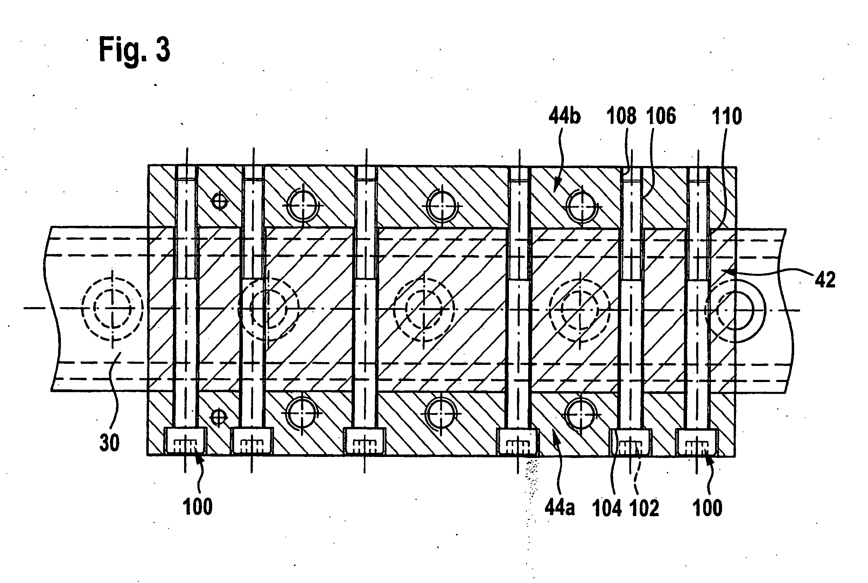

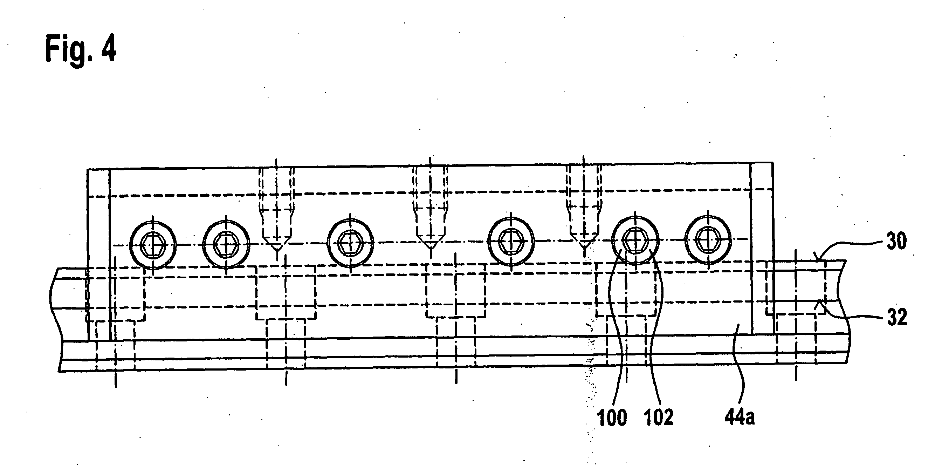

Um den Auflagekörper 42 in jeder eingestellten Position exakt relativ zu den Seitenteilen 44a, 44b fixieren zu können, sind die Seitenteile 44a, 44b, wie insbesondere in Fig. 2, 3 und 4 dargestellt, mit Spannschrauben 100 miteinander verspannt, wobei die Spannschrauben 100 beispielsweise mit ihrem Schraubenkopf 102 das Seitenteil 44a im Bereich von durch Sacklochbohrungen gebildeten Schultern 104 beaufschlagen und mit ihrem Gewindeabschnitt 106 in eine Gewindebohrung 108 des gegenüberliegenden Seitenteils 44b eingreifen, während die Spannschrauben 100 durch eine Relativbewegung des Auflagekörpers 42 zu den Spannschrauben 100 zulassende Durchbrüche 110 im Auflagekörper 42 hindurchgreifen, so daß der Auflagekörper 42 zwischen den Seitenteilen 44a und 44b eingespannt ist und lediglich durch Kraftschluß zwischen den Anlageflächen 62a und 62b sowie den durch diese beaufschlagten Ausrichtflächen 60a und 60b fixiert ist.

Somit besteht die Möglichkeit, durch Lösen der Spannschrauben 100 die Position des Auflagekörpers 42 relativ zu den Seitenteilen 44a und 44b, insbesondere unter Zuhilfenahme der Stellschraube 86, stufenlos und exakt einzustellen und dann durch Anziehen der Spannschrauben 100 kraftschlüssig zu fixieren.

Zur Versorgung der ersten Stützfläche 30 und der auf dieser aufsitzenden ersten Tragfläche 50 sowie der zweiten Stützflächen 32 und den auf diesen aufliegenden zweiten Tragflächen 52 ist in dem Gleitführungskörper 40 ein Schmiermittelkanalsystem 120 vorgesehen, welches eine in der ersten Tragfläche 50 angeordnete Auslaßöffnung 122 sowie in den zweiten Tragflächen 52a, b angeordnete Auslaßöffnungen 124a, 124b umfaßt, durch welche in das Schmiermittelkanalsystem 120 eingespeistes Schmiermittel austreten und zur Schmierung der gegenüber den Stützflächen 30, 32a, 32b bewegbaren Tragflächen 50, 52a, 52b dient.

Damit kann trotz hoher Vorschubgeschwindigkeiten und somit hoher Geschwindigkeiten der Gleitführungsschuhe 40 relativ zu der Führungsschiene 20 eine ausreichende Schmierung zumindest der das Maschinenelement tragenden und aneinander gleitenden Flächen erreicht werden, wobei überflüssiges Schmiermittel von den Tragflächen/Stützflächenpaarungen auch in die Seitenführungsflächen/Gleitführungsflächenpaarungen übertritt und somit die relativ zu den Seitenführungsflächen 36a, 36b gleitenden Gleitführungsflächen 56a, 56b schmiert.

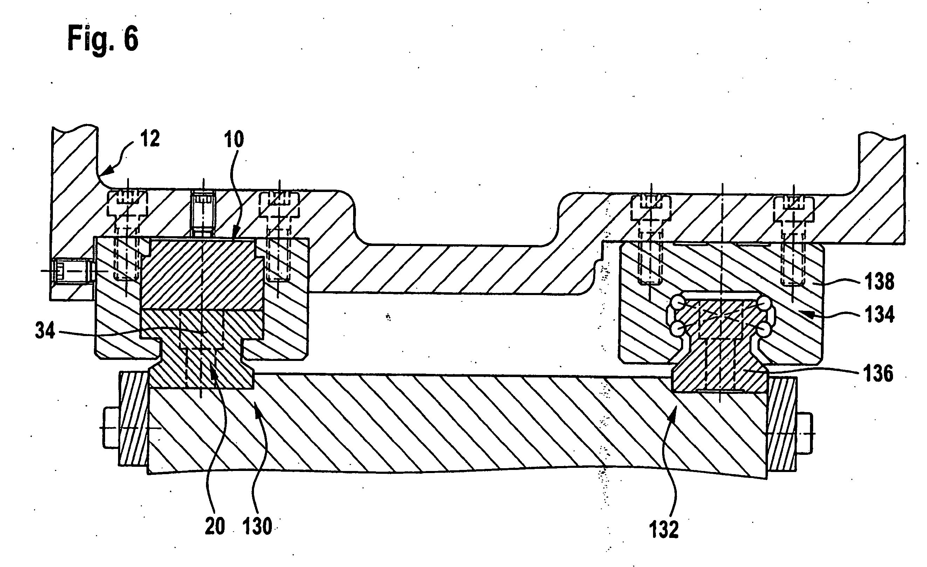

Das erste Ausführungsbeispiel des erfindungsgemäßen Gleitführungssystems läßt sich, wie in Fig. 6 dargestellt, als Hauptführung 130 einer Linearführung einsetzen, wobei als Nebenführung 132 ein übliches Wälzführungssystem 134 eingesetzt ist, welches eine Führungsschiene 136 und einen üblichen Wälzführungsschuh 138 aufweist, wobei der Wälzführungsschuh 138 in Richtung quer zur Längsrichtung 34 der Führungsschiene 20 und parallel zu den Stützflächen 30, 32 a, b derselben eine erheblich geringere Führungssteifigkeit aufweist und somit durch das erfindungsgemäße Gleitführungssystem 10 die präzise Führung des Maschinenelements 12 in der Längsrichtung 34 erreicht wird, welcher das Wälzführungssystem 134 aufgrund seiner geringeren Führungssteifigkeit in Richtung quer zur Längsrichtung 34 und parallel zu den Stützflächen 30, 32a, b derselben folgt, wobei das Wälzführungssystem 134 trotzdem noch einen Beitrag zur Steifigkeit des gesamten Linearführungssystems in dieser Richtung beiträgt.

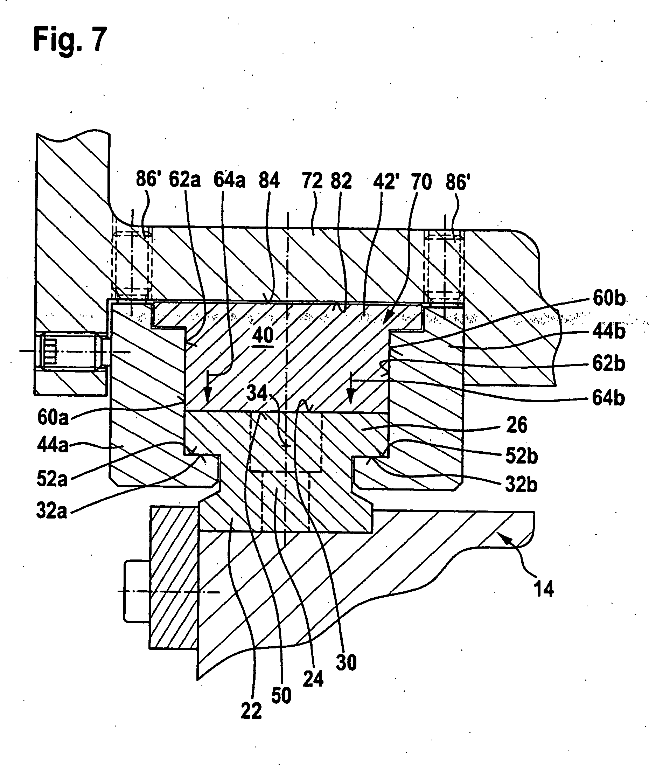

Bei einem zweiten Ausführungsbeispiel eines erfindungsgemäßen Gleitführungssystems, dargestellt in Fig. 7, sitzt der Auflagekörper 42' des Gleitführungsschuhs 40' vollflächig mit seiner Unterseite 84 auf der Oberfläche 82 des Bodens 72 der Halteaufnahme 70 auf, wobei vorzugsweise der Auflagekörper 42' in einem nahe seiner Unterseite 84 liegenden Bereich gegenüber den Ausrichtflächen 60a, 60b verbreitert ist, um eine kippstabilere Abstützung des Auflagekörpers 42' auf der Oberfläche 82 der Halteaufnahme 70 zu erreichen.

Entsprechend sind die Seitenteile 44'a und 44'b nicht relativ zum Boden 72 fixiert, sondern lediglich über die bereits im Zusammenhang mit dem ersten Ausführungsbeispiel beschriebenen Spannschrauben 100 kraftschlüssig durch die an den Ausrichtflächen 60a, 60b mit Vorspannung anliegenden Anlageflächen 62a und 62b an dem Auflagekörper 42' fixiert und über diesen relativ zum Boden 72 abgestützt.

Die Einstellung des Abstandes zwischen den Stützflächen 30, 32a, 32b sowie den Tragflächen 50, 52a, 52b erfolgt über Stellschrauben 86' über die Verschiebung der Seitenteile 44'a, 44'b relativ zum Auflagekörper 42' in den Einstellrichtungen 64a, 64b nach Lösen der Spannschrauben 100 und nachfolgendem Fixieren durch Anziehen der Spannschrauben 100 in analoger Weise wie im Zusammenhang mit dem ersten Ausführungsbeispiel beschrieben.

Im übrigen ist das zweite Ausführungsbeispiel des erfindungsgemäßen Gleitführungssystems 10' in gleicher Weise ausgebildet wie das erste Ausführungsbeispiel, so daß hinsichtlich der Beschreibung weiterer einzelner Teile desselben dieselben Bezugszeichen Verwendung gefunden haben und somit auch auf die Ausführungen im Zusammenhang mit dem ersten Ausführungsbeispiel vollinhaltlich Bezug genommen wird.

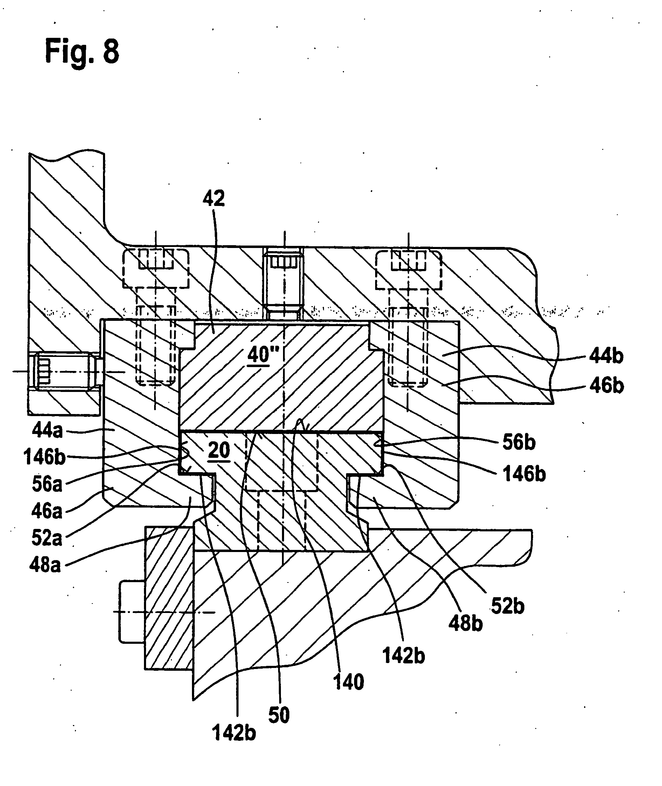

Bei einem dritten Ausführungsbeispiel, dargestellt in Fig. 8, welches vom grundsätzlichen Aufbau dem ersten Ausführungsbeispiel entspricht, sind zusätzlich sowohl die Tragflächen 50, 52a und 52b als auch die Gleitführungsflächen 56a und 56b mit verschleißreduzierenden und einen gleichmäßige, möglichst verringerte Gleitreibung gewährleistenden Beschichtungen 140, 142a und 142b sowie 146a und 146b versehen, welche die Gleiteigenschaften des Gleitführungsschuhs 40 relativ zur Führungsschiene 20 noch weiter verbessern.

Derartige Beschichtungen 140, 142a und 142b sowie 146a und 146b lassen sich bei dem erfindungsgemäßen Gleitführungsschuh 40" besonders günstig einsetzen, da sich die Beschichtungen in einfacher Weise auf die Tragfläche 50 des Auflagekörpers 42 sowie die Tragflächen 52a und 52b der Seitenteile 44a und 44b sowie die Gleitführungsflächen 56a und 56b der Seitenteile 44a und 44 b auftragen lassen, ohne daß diese bei der Anpassung des Gleitführungsschuhs 40" an die Führungsschiene 20 beschädigt werden, da sich die Anpassung einerseits durch Bearbeiten der Ausrichtflächen 60a und 60b des Auflagekörpers 42 erreichen läßt, die von den Beschichtungen 140, 142a, b sowie 146a, b nicht tangiert sind und andererseits durch Einstellen des Auflagekörpers 42 relativ zu den Seitenteilen 44a und 44b in die Einstellrichtungen 46a und 46b, wodurch ebenfalls keine der Beschichtungen 140, 142a, 142b sowie 146a und 146b tangiert ist.

Im übrigen wird hinsichtlich der weiteren Teile des dritten Ausführungsbeispiels vollinhaltlich auf die Ausführungen zum ersten Ausführungsbeispiel Bezug genommen.

## Patentansprüche

1. Gleitführungssystem (10) für Werkzeugmaschinen umfassend eine Führungsschiene (20) mit einem Fußbereich (22) und einem sich von diesem zu einem Führungsbereich (26) erstreckenden Tragbereich (24) mit einer am Führungsbereich (26) auf einer dem Tragbereich (24) gegenüberliegenden Seite angeordneten ersten Stützfläche (30) sowie am Führungsbereich (26) auf einer dem Tragbereich (24) zugewandten Seite beiderseits des Tragbereichs (24) angeordneten zweiten Stützflächen (32a, 32b) und mit außerdem am Führungsbereich (26) seitlich zwischen der ersten Stützfläche (30) und den zweiten Stützflächen (32a, 32b) angeordneten Seitenführungsflächen (36a, 36b), und ferner umfassend mindestens eine Gleitführungsaufnahme (40), welche an den Stützflächen (30, 32a, b) und den Seitenführungsflächen (36a, 36b) der Führungsschiene (20) gleitend geführt ist,
**dadurch gekennzeichnet, dass** die Gleitführungsaufnahme als Gleitführungsschuh (40) ausgebildet ist und einen Auflagekörper (42) aufweist, welcher mit einer ersten Tragfläche (50) auf der ersten Stützfläche (30) aufliegt, dass der Gleitführungsschuh zwei Seitenteile (44a, 44b) aufweist, von denen jedes mit jeweils einer Gleitführungsfläche (56a, 56b) an einer der Seitenführungsflächen (36a, 36b) anliegt und mit jeweils einer zweiten Tragfläche (52a, 52b) an jeweils einer der zweiten Stützflächen (32a, 32b) anliegt, dass mindestens eines der Seitenteile (44a, 44b) relativ zum Auflagekörper (42) in einer zur jeweiligen Gleitführungsfläche (56a, 56b) parallel und quer zu den Tragflächen (50, 52a, b) verlaufenden Einstellrichtung (64) relativ zum Auflagekörper (42) einstellbar gehalten ist, dass der Auflagekörper (42) mindestens eine Ausrichtfläche (60a, b) aufweist, an welcher das einstellbare Seitenteil (44a, b) mit einer Anlagefläche (62a, b) in der Einstellrichtung (64a, b) einstellbar anliegt, dass die Ausrichtfläche (60a, b) die Position der Gleitführungsfläche (56a, b) des an diese Ausrichtfläche (60a, b) anlegbaren Seitenteils (44a, b) gegenüber der Gleitführungsfläche (56b, a) des anderen Seitenteils (44b, a) festlegt, und dass das mindestens eine der Seiteteile (44a, 44b) in der eingestellten Stellung mit dem Auflagekörper (42) verbindbar ist.

2. Gleitführungssystem nach Anspruch 1, **dadurch gekennzeichnet, dass** beide Seitenteile (44a, 44b) relativ zum Auflagekörper (42) positionierbar und in dieser Stellung mit dem Auflagekörper (42) verbindbar sind.

3. Gleitführungssyltem nach Anspruch 1 oder 2, **dadurch gekennzeichnet, dass** beide Seitenteile in einer zu ihrer jeweiligen Gleitführungsfläche (56a, 56b) parallel und quer zu den Tragflächen (50, 52a, b) verlaufenden Einstellrichtung (64) einstellbar relativ zum Auflagekörper (42) gehalten sind.

4. Gleitführungssystem nach einem der voranstehenden Ansprüche, **dadurch gekennzeichnet, dass** der Auflagekörper (42) für jedes der Seitenteile (44a, b) eine Ausrichtfläche (60a, b) aufweist und dass über diese Ausrichtfläche (60a, b) ein Abstand der Gleitführungsflächen (56a, b) der an diesen Ausrichtflächen (60a, b) anlegbaren Seitenteilen (44a, b) definiert ist.

5. Gleitführungssystem nach einem der voranstehenden Ansprüche, **dadurch gekennzeichnet, dass** die jeweilige Ausrichtfläche (60a, b) mit der jeweiligen Gleitführungsfläche (56a, b) fluchtend verläuft.

6. Gleitführungssystem nach einem der voranstehenden Ansprüche, **dadurch gekennzeichnet, dass** der Auflagekörper (42) und die Seitenteile (44a, b) gegen eine Bewegung in der Einstellrichtung (64) kraftschlüssig aneinander fixierbar sind.

7. Gleitführungssystem nach einem der voranstehenden Ansprüche, **dadurch gekennzeichnet, dass** die erste Tragfläche (50) des Auflagekörpers (42) mit einer verschleißreduzierenden Beschichtung (140) versehen ist.

8. Gleitführungssystem nach einem der voranstehenden Ansprüche, **dadurch gekennzeichnet, dass** die zweiten Tragflächen (52a, b) der Seitenteile (44a, b) mit einer verschleißreduzierenden Beschichtung (142a,b) versehen sind.

9. Gleitführungssystem nach einem der voranstehenden Ansprüche, **dadurch gekennzeichnet, dass** die Gleitführungsflächen (56a, b) der Seitenteile (44a, b) mit einer verschleißreduzierenden Beschichtung (146a,b) versehen sind.

10. Gleitführungssystem nach einem der voranstehenden Ansprüche, **dadurch gekennzeichnet, dass** die beiden Seitenteile (44a, b) mit einem jeweiligen Fußteil (78a, b) an dem den Gleitführungsschuh (40) tragenden Maschinenelement (12) oder Maschinengestell (14) feststehend angeordnet sind und dass der Auflagekörper (42) gegenüber den Seitenteilen (44a, b) einstellbar angeordnet ist.

11. Gleitführungssystem nach einem der Ansprüche 1 bis 9, **dadurch gekennzeichnet, dass** der Auflagekörper (42) gegenüber dem Maschinenelement (12) oder Maschinengestell (14) feststehend angeordnet ist und dass die Seitenteile (44a,b) gegenüber dem Auflagekörper (42) einstellbar angeordnet sind.

12. Gleitführungssystem nach einem der voranstehenden Ansprüche, **dadurch gekennzeichnet, dass** der Gleitführungsschuh (40) in einer Halteaufnahme (70) des Maschinenelements (12) oder Maschinengestells (14) angeordnet ist.

13. Gleitführungssystem nach Anspruch 12, **dadurch gekennzeichnet, dass** die Seitenteile (44a, b) mit einem Boden (72) der Halteaufnahme (70) verschraubt sind.

14. Gleitführungssystem nach Anspruch 13, **dadurch gekennzeichnet, dass** der Boden (72) der Halteaufnahme (70) ein Stellelement (86) zum Beaufschlagen des Auflagekörpers (42) aufweist.

15. Gleitführungssystem nach Anspruch 12, **dadurch gekennzeichnet, dass** der Auflagekörper (42') mit dem Boden (72) der Halteaufnahme (70) verschraubt ist.

16. Gleitführungssystem nach Anspruch 15, **dadurch gekennzeichnet, dass** der Boden (72), der Halteaufnahme (70) Stellelemente (86') zum Beaufschlagen der Seitenteile (44'a, 44'b) aufweist.

17. Gleitführungssystem nach einem der Ansprüche 12 bis 16, **dadurch gekennzeichnet, dass** die Halteaufnahme (70) zwei einander gegenüberliegende und die Seitenteile (44a, b) zwischen sich aufnehmende Positionierelemente (74a, b) aufweist.

18. Gleitführungssystem nach Anspruch 17, **dadurch gekennzeichnet, dass** ein erstes (74b) der Positionierelemente (74a, b) als Anschlag ausgebildet ist und ein zweites (74a) der Positionierelemente (74a, b) ein Stellelement (94) aufweist, mit welchem der Gleitführungsschuh (40) gegen das erste Positionierelement (74b) anlegbar ist.

19. Gleitführungssystem nach einem der voranstehenden Ansprüche, **dadurch gekennzeichnet, dass** in dem Gleitführungsschuh (40) ein Schmiermittelkanalsystem (120) zur Schmierung der ersten Tragfläche (50) angeordnet ist.

20. Gleitführungssystem nach einem der voranstehenden Ansprüche, **dadurch gekennzeichnet, dass** in dem Gleitführungsschuh (40) ein Schmiermittelkanalsystem (120) zur Schmierung der zweiten Tragflächen (52a, b) angeordnet ist.

21. Werkzeugmaschine umfassend ein Maschinengestell (14) und ein am Maschinengestell (14) angeordnetes und gegenüber diesem mindestens mittels einer Linearführung bewegbar geführtes Maschinenelement (12) **dadurch gekennzeichnet, dass** die Linearführung als Hauptführung (130) mindestens ein Gleitführungssystem (10) aufweist, welches nach einem der voranstehenden Ansprüche ausgebildet ist, und mindestens ein weiteres Führungssystem als Nebenführung (132) ausgebildet ist.

22. Werkzeugmaschine nach Anspruch 21, **dadurch gekennzeichnet, dass** das weitere Führungssystem (132) als Wälzführungssystem (134) ausgebildet ist.

## Claims

1. Sliding guide system (10) for machine tools, comprising a guide rail (20) with a foot region (22) and a bearing region (24) extending from the foot region to a guide region (26) with a first support face (30) arranged on the guide region (26) on a side opposite to the bearing region (24) as well as second support faces (32a, 32b) arranged on the guide region (26) on a side facing the bearing region (24) on both sides of the bearing region (24) and with side guide faces (36a, 36b) also arranged on the guide region (26) laterally between the first support face (30) and the second support faces (32a, 32b), and further comprising at least one sliding guide seating (40), which is guided in a sliding manner on the support faces (30, 32a, b) and the side guide faces (36a, 36b) of the guide rail (20), **characterised in that** the sliding guide seating is configured as a sliding guide shoe (40) and has a support body (42), with a first bearing face (50) which abuts the first support face (30), **in that** the sliding guide shoe has two side parts (44a, 44b), each of which has a respective sliding guide face (56a, 56b) which abuts one of the side guide faces (36a, 36b) and a respective second bearing face (52a, 52b) which abuts a respective one of the second support faces (32a, 32b), **in that** at least one of the side parts (44a, 44b) is adjustably held relative to the support body (42) in an adjustment direction (64) extending parallel to the respective sliding guide face (56a, 56b) and transverse to the bearing faces (50, 52a, b) relative to the support body (42), **in that** the support body (42) has at least one locating face (60a, b), against which a contact face (62a, b) of the adjustable side part (44a, b) adjustably abuts in the adjustment direction (64a, b), **in that** the locating face (60a, b) determines the position of the sliding guide face (56a, b) of the side part (44a, b), which can abut this locating face (60a, b) relative to the sliding guide face (56b, a) of the other side part (44b, a), and **in that** the at least one of the side parts (44a, b) can be connected to the support body (42) in the adjusted position.

2. Sliding guide system according to claim 1, **characterised in that** the two side parts (44a, 44b) can be positioned relative to the support body (42) and can be connected to the support body (42) in this position.

3. Sliding guide system according to claim 1 or 2, **characterised in that** the two side parts are adjustably held relative to the support body (42) in an adjustment direction (64) extending parallel to their respective sliding guide face (56a, 56b) and transverse to the bearing faces (50, 52a, b).

4. Sliding guide system according to any one of the preceding claims, **characterised in that** the support body (42) has a locating face (60a, b) for each of the side parts (44a, b) and **in that** by means of this locating face (60a, b) there is defined a spacing of the sliding guide faces (56a, b) of the side parts (44a, b), which can abut these locating faces (60a, b).

5. Sliding guide system according to any one of the preceding claims, **characterised in that** the respective locating face (60a, b) extends in alignment with the respective sliding guide face (56a, b).

6. Sliding guide system according to any one of the preceding claims, **characterised in that** the support body (42) and the side parts (44a, b) can be fixed to one another in force-locking manner against a movement in the adjustment direction (64).

7. Sliding guide system according to any one of the preceding claims, **characterised in that** the first bearing face (50) of the support body (42) is provided with a wear-reducing coating (140).

8. Sliding guide system according to any one of the preceding claims, **characterised in that** the second bearing faces (52a, b) of the side parts (44a, b) are provided with a wear-reducing coating (142a, b).

9. Sliding guide system according to any one of the preceding claims, **characterised in that** the sliding guide faces (56a, b) of the side parts (44a, b) are provided with a wear-reducing coating (146a, b).

10. Sliding guide system according to any one of the preceding claims, **characterised in that** the two side parts (44a, b) are arranged in a fixed manner with a respective foot part (78a, b) on the machine element (12) carrying the sliding guide shoe (40), or machine frame (14), and **in that** the support body (42) is adjustably arranged relative to the side parts (44a, b).

11. Sliding guide system according to any one of claims 1 to 9, **characterised in that** the support body (42) is arranged in a fixed manner relative to the machine element (12) or machine frame (14) and **in that** the side parts (44a, b) are adjustably arranged relative to the support body (42).

12. Sliding guide system according to any one of the preceding claims, **characterised in that** the sliding guide shoe (40) is arranged in a holding seating (70) of the machine element (12) or machine frame (14).

13. Sliding guide system according to claim 12, **characterised in that** the side parts (44a, b) are screwed to a base (72) of the holding seating (70).

14. Sliding guide system according to claim 13, **characterised in that** the base (72) of the holding seating (70) has an adjusting element (86) to act on the support body (42).

15. Sliding guide system according to claim 12, **characterised in that** the support body (42') is screwed to the base (72) of the holding seating (70).

16. Sliding guide system according to claim 15, **characterised in that** the base (72) of the holding seating (70) has adjusting elements (86') to act on the side parts (44'a, 44'b).

17. Sliding guide system according to any one of claims 12 to 16, **characterised in that** the holding seating (70) has two positioning elements (74a, b) which are opposite one another and receive the side parts (44a, b) between them.

18. Sliding guide system according to claim 17, **characterised in that** a first (74b) of the positioning elements (74a, b) is configured as a stop and a second (74a) of the positioning elements (74a, b) has an adjustment element (94), with which the sliding guide shoe (40) can be abutted against the first positioning element (74b).

19. Sliding guide system according to any one of the preceding claims, **characterised in that** a lubricant duct system (120) to lubricate the first bearing face (50) is arranged in the sliding guide shoe (40).

20. Sliding guide system according to any one of the preceding claims, **characterised in that** a lubricant duct system (120) to lubricate the second bearing faces (52a, b) is arranged in the sliding guide shoe (40).

21. Machine tool comprising a machine frame (14) and a machine element (12) arranged on the machine frame (14) and movably guided relative thereto at least by means of a linear guide, **characterised in that** the linear guide, as the main guide (130), has at least one sliding guide system (10), which is configured according to any one of the preceding claims, and at least one further guide system is configured as an auxiliary guide (132).

22. Machine tool according to claim 21, **characterised in that** the further guide system (132) is configured as a rolling guide system (134).

## Revendications

1. Système de guidage à glissement (10) pour machines-outils, comportant un rail de guidage (20) avec une zone de base (22) et une zone de support (24), qui s'étend à partir de cette dernière vers une zone de guidage (26), avec une première surface d'appui (30), disposée sur la zone de guidage (26) sur une face opposée à la zone de support (24), ainsi que des deuxièmes surfaces d'appui (32a, 32b), disposées sur la zone de guidage (26) sur une face orientée vers la zone de support (24), de part et d'autre de la zone de support (24), et avec, en outre, des surfaces de guidage latérales (36a, 36b), disposées sur la zone de guidage (26) latéralement entre la première surface d'appui (30) et les deuxièmes surfaces d'appui (32a, 32b), et comportant en outre au moins un logement de guidage à glissement (40) qui est guidé par glissement sur les surfaces d'appui (30, 32a, b) et les surfaces de guidage latérales (36a, 36b) du rail de guidage (20), **caractérisé en ce que** le logement de guidage à glissement est réalisé sous la forme d'un patin de guidage à glissement (40) et comporte un corps d'appui (42), qui est en appui avec une première surface de support (50) sur la première surface d'appui (30), **en ce que** le patin de guidage à glissement comporte deux parties latérales (44a, 44b), dont chacune est en appui sur l'une des surfaces de guidage latérales (36a, 36b) avec respectivement une surface de guidage (56a, 56b), et est en appui sur respectivement l'une des deuxièmes surfaces d'appui (32a, 32b) avec respectivement une deuxième surface de support (52a, 52b), **en ce qu'**au moins l'une des parties latérales (44a, 44b) est maintenue réglable par rapport au corps d'appui (42) dans une direction de réglage (64) par rapport au corps d'appui (42), orientée parallèlement à la surface de guidage à glissement (56a, 56b) respective et transversalement aux surfaces de support (50, 52a, b), **en ce que** le corps d'appui (42) comporte au moins une surface d'alignement (60a, b) contre laquelle la partie latérale (44a, b) réglable est en appui avec une surface d'appui (62a, b) de manière réglable dans la direction de réglage (64a, b), **en ce que** la surface d'alignement (60a, b) définit la position de la surface de guidage à glissement (56a, b) de la partie latérale (44a, b), pouvant prendre appui contre ladite surface d'alignement (60a, b), par rapport à la surface de guidage à glissement (56a, b) de l'autre partie latérale (44b, a), et **en ce que** ladite au moins une partie latérale (44a, 44b) peut être assemblée au corps d'appui (42) dans la position réglée.

2. Système de guidage à glissement selon la revendication 1, **caractérisé en ce que** les deux parties latérales (44a, 44b) sont positionnables par rapport au corps d'appui (42) et, dans cette position, peuvent être assemblées au corps d'appui (42).

3. Système de guidage à glissement selon la revendication 1 ou 2, **caractérisé en ce que** les deux parties latérales sont maintenues par rapport au corps d'appui (42), de manière réglage dans une direction de réglage (64) orientée parallèlement à leurs surfaces de guidage à glissement (56a, 56b) respectives et transversalement aux surfaces de support (50, 52a, b).

4. Système de guidage à glissement selon l'une quelconque des revendications précédentes, **caractérisé en ce que** le corps d'appui (42) comporte une surface d'alignement (60a, b) pour chacune des parties latérales (44a, b) et **en ce que**, par l'intermédiaire de cette surface d'alignement (60a, b), est définie une distance des surfaces de guidage à glissement (56a, b) des parties latérales (44a, 44b) pouvant venir en appui contre lesdites surfaces d'alignement (60a, b).

5. Système de guidage à glissement selon l'une quelconque des revendications précédentes, **caractérisé en ce que** la surface d'alignement (60a, b) respective s'étend en alignement avec la surface de guidage à glissement (56a, b) respective.

6. Système de guidage à glissement selon l'une quelconque des revendications précédentes, **caractérisé en ce que** le corps d'appui (42) et les parties latérales (44a, b) peuvent être fixés l'un contre l'autre par application de force pour empêcher tout mouvement dans la direction de réglage (64).

7. Système de guidage à glissement selon l'une quelconque des revendications précédentes, **caractérisé en ce que** la première surface de support (50) du corps d'appui (42) est revêtue par un revêtement (140) diminuant l'usure.

8. Système de guidage à glissement selon l'une quelconque des revendications précédentes, **caractérisé en ce que** les deuxièmes surfaces de support (52a, b) des parties latérales (44a, b) sont revêtues par un revêtement (142a, b) diminuant l'usure.

9. Système de guidage à glissement selon l'une quelconque des revendications précédentes, **caractérisé en ce que** les surfaces de guidage à glissement (56a, b) des parties latérales (44a, 44b) sont revêtues par un revêtement (146a, b) diminuant l'usure.

10. Système de guidage à glissement selon l'une quelconque des revendications précédentes, **caractérisé en ce que** les deux parties latérales (44a, b) sont disposées de manière fixe avec une partie inférieure (78a, b) respective contre l'élément de machine (12) portant le patin de guidage à glissement (40) ou le bâti (14) de la machine, et **en ce que** le corps d'appui (42) est disposé de manière réglable par rapport aux parties latérales (44a, 44b).

11. Système de guidage à glissement selon l'une quelconque des revendications 1 à 9, **caractérisé en ce que** le corps d'appui (42) est disposé de manière fixe par rapport à l'élément de machine (12) ou au bâti (14) de la machine, et **en ce que** les parties latérales (44a, 44b) sont disposées de manière réglable par rapport au corps d'appui (42).

12. Système de guidage à glissement selon l'une quelconque des revendications précédentes, **caractérisé en ce que** le patin de guidage à glissement (40) est disposé dans un logement de retenue (70) de l'élément de machine (12) ou du bâti (14) de la machine.

13. Système de guidage à glissement selon la revendication 12, **caractérisé en ce que** les parties latérales (44a, 44b) sont vissées avec un fond (72) du logement de retenue (70).

14. Système de guidage à glissement selon la revendication 13, **caractérisé en ce que** le fond (72) du logement de retenue (70) comporte un élément de réglage (86) destiné à solliciter le corps d'appui (42).

15. Système de guidage à glissement selon la revendication 12, **caractérisé en ce que** le corps d'appui (42) est vissé avec le fond (72) du logement de retenue (70).

16. Système de guidage à glissement selon la revendication 15, **caractérisé en ce que** le fond (72) du logement de retenue (70) comporte des éléments de réglage (86') destinés à solliciter les parties latérales (44'a, 44'b).

17. Système de guidage à glissement selon l'une quelconque des revendications 12 à 16, **caractérisé en ce que** le logement de retenue (70) comporte deux éléments de positionnement (74a, b) disposés l'un en face de l'autre et recevant entre eux les parties latérales (44a, 44b).

18. Système de guidage à glissement selon la revendication 17, **caractérisé en ce qu'**un premier (74b) des éléments de positionnement (74a, b) est réalisé sous forme de butée, et un deuxième (74a) des éléments de positionnement (74a, b) comporte l'élément de réglage (94), par lequel le patin de guidage à glissement (40) peut être mis en appui contre le premier élément de positionnement (74b).

19. Système de guidage à glissement selon l'une quelconque des revendications précédentes, **caractérisé en ce que** dans le patin de guidage à glissement (40) est disposé un système de conduits de lubrifiant (120) pour lubrifier la première surface de support (50).

20. Système de guidage à glissement selon l'une quelconque des revendications précédentes, **caractérisé en ce que** dans le patin de guidage à glissement (40) est disposé un système de conduits de lubrifiant (120) pour lubrifier les deuxièmes surfaces de support (52a, b).

21. Machine-outil comportant un bâti (14) et un élément de machine (12), disposé sur le bâti (14) et mobile par rapport à celui-ci au moins au moyen d'un guidage linéaire, **caractérisée en ce que** le guidage linéaire comporte au moins un système de guidage à glissement (10) formant un guidage principal (130), lequel est réalisé selon l'une quelconque des revendications précédentes, et au moins un système de guidage supplémentaire est réalisé sous forme de guidage auxiliaire (132).

22. Machine-outil selon la revendication 21, **caractérisée en ce que** le système de guidage (132) supplémentaire est réalisé sous la forme d'un système de guidage à roulements (134).
